# EUROPEAN PATENT SPECIFICATION

(11) **EP 4 530 464 B1**
(45) Date of publication and mention of the grant of the patent: **06.05.2026**
(21) Application number: 23382977.9
(22) Date of filing: 26.09.2023
(51) Int. Cl.: F03D 17/00

(54) **METHODS FOR ESTIMATING VALUES OF WIND TURBINE OPERATIONAL PARAMETERS**
VERFAHREN ZUR SCHÄTZUNG VON WERTEN VON WINDTURBINENBETRIEBSPARAMETERN
PROCÉDÉS D'ESTIMATION DE VALEURS DE PARAMÈTRES OPÉRATIONNELS D'ÉOLIENNE

(43) Date of publication of application: 02.04.2025
(73) Proprietor: GE VERNOVA RENOVABLES ESPAÑA, S.L., 08005 Barcelona (ES)
(72) Inventor: BOND-SMITH, Louis, 08005 Barcelona (ES); ALBISU ISO, Efren, 08005 Barcelona (ES); PINEDA AMO, Isaac, 08005 Barcelona (ES)
(74) Representative: Bardehle Pagenberg S.L.

(56) References cited:
- EP-A1- 3 760 861
- EP-A1- 3 772 652

## Description

The present disclosure relates to methods for estimating values of operational parameters of a wind turbine. The present disclosure further relates to wind turbine controllers and to wind turbines.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. Said rotation generates a torque that is normally transmitted through a rotor shaft to a generator, either directly ("directly driven" or "gearless") or through the use of a gearbox. This way, the generator produces electricity which can be supplied to the electrical grid.

The wind turbine hub may be rotatably coupled to a front of the nacelle. The wind turbine hub may be connected to a rotor shaft, and the rotor shaft may then be rotatably mounted in the nacelle using one or more rotor shaft bearings arranged in a frame inside the nacelle. The nacelle is a housing arranged on top of a wind turbine tower that may contain and protect the gearbox (if present) and the generator (if not placed outside the nacelle) and, depending on the wind turbine, further components such as a power converter, and auxiliary systems.

A wind turbine includes a plurality of sensors. The sensors may monitor the wind turbine and for example help to check the health of the wind turbine or help to control how the wind turbine operates. For example, a wind turbine may comprise temperature sensors, vibration sensors, pressure sensors and others to check whether the wind turbine is damaged or not, or whether it is at risk. A wind turbine may also comprise sensors such as a wind speed sensor, a rotor speed sensor, an azimuth angle sensor and others, whose measurements may be used for controlling the wind turbine. Different ways of controlling a wind turbine may be implemented.

Generated power may be controlled based on a tip speed ratio (TSR), a pitch angle and a torque. The TSR depends on the rotor speed, the rotor radius and the wind speed. Sensors may therefore be used in some examples to measure wind speed, rotor speed, pitch angle and/or torque, either to calculate setpoints for parameters, e.g. pitch angle and torque, and/or for checking that the setpoints are being followed.

An anemometer may measure wind speed and wind direction, and the measured wind speed and wind direction may be used to e.g. calculate a suitable pitch angle of the wind turbine blades and/or a suitable generator torque. Similarly, an encoder arranged with a generator rotor may be used for measuring rotor speed, and the measured rotor speed may also be considered when calculating the pitch angle and/or the generator torque. Suitable actuators, e.g. pitch drives, yaw drives, power electronics and others, may then be activated to establish the desired behavior of the wind turbine.

However, some wind turbine sensors may be noisy and unreliable. For example, the anemometer may not be reliable when measuring wind speed, as wind speed may only be measured at hub height and behind the rotor plane and thus disturbed by the rotor. Also, sensors may get damaged and fail. If a sensor is relevant for the operation and control of the wind turbine, the actuators may be overused, and vibrations and loads may increase. This may cause non-optimal operation of the wind turbine and a risk for the integrity of the wind turbine in severe cases.

Documents considered during the patent prosecution are i.a.: EP 3 772 652 A1 and EP 3 760 861 A1.

### SUMMARY

In an aspect of the present disclosure, a method for estimating an actual value of an operational parameter of a wind turbine is provided. The method comprises receiving data related to the operational parameter from a plurality of sensors of the wind turbine and determining which sensors of the plurality of sensors are reliable and which sensors of the plurality of sensors are unreliable. The method further comprises estimating the actual value of the operational parameter based on a mathematical model and on the data related to the operational parameter received from the reliable sensors.

According to this aspect, a plurality of sensors can be used to improve accuracy in the determination of an operational parameter. It may be determined which of these wind turbine sensors provide reliable measurements. Measurements which are not deemed reliable may be excluded when estimating the actual value of a certain operational parameter of a wind turbine. The accuracy of the value of the estimated parameter may therefore be increased.

Throughout this disclosure, the word (un)reliable with respect to the sensors may at least cover both accuracy and precision aspects. In some examples, a sensor may be deemed unreliable, i.e. not trustworthy, because it is deemed not accurate, or not precise, or not precise and not accurate.

An operational parameter may be understood as a parameter which may determine the operation of the wind turbine, for example a portion of the wind turbine or an element or component of the wind turbine. An operational parameter may be determined for use in controlling the wind turbine, e.g. a (an actual) value of an operational parameter may be used as a setpoint for the wind turbine. In some examples, the operational parameter may not be directly used as a setpoint for the wind turbine, but rather as a value from which a setpoint is determined. According to the invention, the operational parameter is rotor speed and/or azimuth angle.

Data related to the operational parameter may refer to data directly or indirectly indicative of a value of the operational parameter. For example, if the operational parameter is rotational speed, data related to operational speed may be rotational speed itself or e.g. location measurements from an encoder (speed may be determined based on the first time derivative of the locations) or currents measured in the converter (since rotational speed may be determined based on these currents) or other data that allows to derive or estimate the rotational speed.

In a further aspect of the present disclosure, a wind turbine controller is provided. The wind turbine controller comprises a processor and a memory. The memory comprises instructions that, when executed by the processor, cause the processor to receive data related to an operational parameter from a plurality of sensors of the wind turbine, determine which sensors of the plurality of sensors are reliable and which sensors of the plurality of sensors are unreliable, and to estimate the actual value of the operational parameter based on a mathematical model and on the data related to the operational parameter received from the reliable sensors.

In a further aspect of the present disclosure, a wind turbine is provided. The wind turbine comprises a tower, a nacelle on top of the tower and a rotor connected to the nacelle. The rotor comprises a hub and a plurality of blades connected to the hub through pitch bearings. The wind turbine further comprises the wind turbine controller of the previous aspect.

In a further aspect of the present disclosure, a method for estimating a value of an operational parameter of a wind turbine is provided. The method comprises measuring data related to the operational parameter with a plurality of wind turbine sensors and determining which sensors are faulty or excessively noisy. The method further comprises performing an initial estimation of the actual value of the operational parameter with a mathematical model and correcting the initial estimation with data directly indicative of the operational parameter based on measurements by the reliable sensors.

### BRIEF DESCRIPTION OF THE DRAWINGS

Figure 1 illustrates a perspective view of one example of a wind turbine;
Figure 2 illustrates a simplified, internal view of one example of the nacelle of the wind turbine of the figure 1;
Figure 3 shows a flow chart of an example of a method for estimating an actual value of an operational parameter of a wind turbine;
Figure 4 schematically illustrates an example of how an actual value of an operational parameter can be determined from measurements from wind turbine sensors.
Figure 5 shows an example of rotor speed curves obtained from measurements by three wind turbine sensors and a rotor speed curve comprising actual values of an estimation of rotor speed;
Figure 6 shows an example of a difference between the measured rotor speeds of figure 5 and the estimated rotor speed of figure 5; and
Figure 7 shows a flow chart of another example of a method for estimating an actual value of an operational parameter of a wind turbine.

### DETAILED DESCRIPTION OF EXAMPLES

Reference now will be made in detail to embodiments of the present disclosure, one or more examples of which are illustrated in the drawings. Each example is provided by way of explanation only, not as a limitation. In fact, it will be apparent to those skilled in the art that various modifications and variations can be made in the present disclosure. For instance, features illustrated or described as part of one embodiment can be used with another embodiment to yield a still further embodiment. Thus, it is intended that the present disclosure covers such modifications and variations if they fall within the scope of the appended claims.

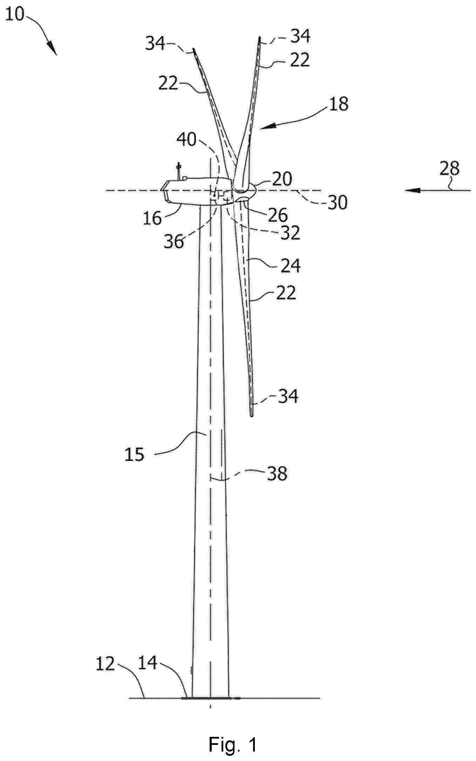

Figure 1 is a perspective view of an example of a wind turbine 10. In the example, the wind turbine 10 is a horizontal-axis wind turbine. Alternatively, the wind turbine 10 may be a vertical-axis wind turbine. In the example, the wind turbine 10 includes a tower 15 that extends from a support system 14 on a ground 12, a nacelle 16 mounted on tower 15, and a rotor 18 that is coupled to nacelle 16. The rotor 18 includes a rotatable hub 20 and at least one rotor blade 22 coupled to and extending outward from the hub 20. In the example, the rotor 18 has three rotor blades 22. In an alternative embodiment, the rotor 18 includes more or less than three rotor blades 22. The tower 15 may be fabricated from tubular steel to define a cavity (not shown in figure 1) between a support system 14 and the nacelle 16. In an alternative embodiment, the tower 15 is any suitable type of a tower having any suitable height. According to an alternative, the tower can be a hybrid tower comprising a portion made of concrete and a tubular steel portion. Also, the tower can be a partial or full lattice tower.

The rotor blades 22 are spaced about the hub 20 to facilitate rotating the rotor 18 to enable kinetic energy to be transferred from the wind into usable mechanical energy, and subsequently, electrical energy. The rotor blades 22 are mated to the hub 20 by coupling a blade root region 24 to the hub 20 at a plurality of load transfer regions 26. The load transfer regions 26 may have a hub load transfer region and a blade load transfer region (both not shown in figure 1). Loads induced to the rotor blades 22 are transferred to the hub 20 via the load transfer regions 26.

In examples, the rotor blades 22 may have a length ranging from about 15 meters (m) to about 90 m or more. Rotor blades 22 may have any suitable length that enables the wind turbine 10 to function as described herein. For example, non-limiting examples of blade lengths include 20 m or less, 37 m, 48.7 m, 50.2m, 52.2 m or a length that is greater than 91 m. As wind strikes the rotor blades 22 from a wind direction 28, the rotor 18 is rotated about a rotor axis 30. As the rotor blades 22 are rotated and subjected to centrifugal forces, the rotor blades 22 are also subjected to various forces and moments. As such, the rotor blades 22 may deflect and/or rotate from a neutral, or non-deflected, position to a deflected position.

Moreover, a pitch angle of the rotor blades 22, e.g. an angle that determines an orientation of the rotor blades 22 with respect to the wind direction, may be changed by a pitch system 32 to control the load and power generated by the wind turbine 10 by adjusting an angular position of at least one rotor blade 22 relative to wind vectors. Pitch axes 34 of rotor blades 22 are shown. During operation of the wind turbine 10, the pitch system 32 may particularly change a pitch angle of the rotor blades 22 such that the angle of attack of (portions of) the rotor blades are reduced, which facilitates reducing a rotational speed and/or facilitates a stall of the rotor 18.

In the example, a blade pitch of each rotor blade 22 is controlled individually by a wind turbine controller 36 or by a pitch control system 80. Alternatively, the blade pitch for all rotor blades 22 may be controlled simultaneously by said control systems.

Further, in the example, as the wind direction 28 changes, a yaw direction of the nacelle 16 may be rotated about a yaw axis 38 to position the rotor blades 22 with respect to wind direction 28.

In the example, the wind turbine controller 36 is shown as being centralized within the nacelle 16, however, the wind turbine controller 36 may be a distributed control system throughout the wind turbine 10, on the support system 14, within a wind farm, and/or at a remote-control center. The wind turbine controller 36 may include one or more processors configured to perform one or more of the steps of the methods described herein. Further, many of the other components described herein include one or more processors. The wind turbine controller 36 may also include a memory, e.g. one or more memory devices. As used herein, a memory may comprise memory element(s) including, but not limited to, a computer readable medium (e.g., random access memory (RAM)), a computer readable non-volatile medium (e.g., a flash memory), a floppy disk, a compact disc-read only memory (CD-ROM), a magnetooptical disk (MOD), a digital versatile disc (DVD) and/or other suitable memory elements.

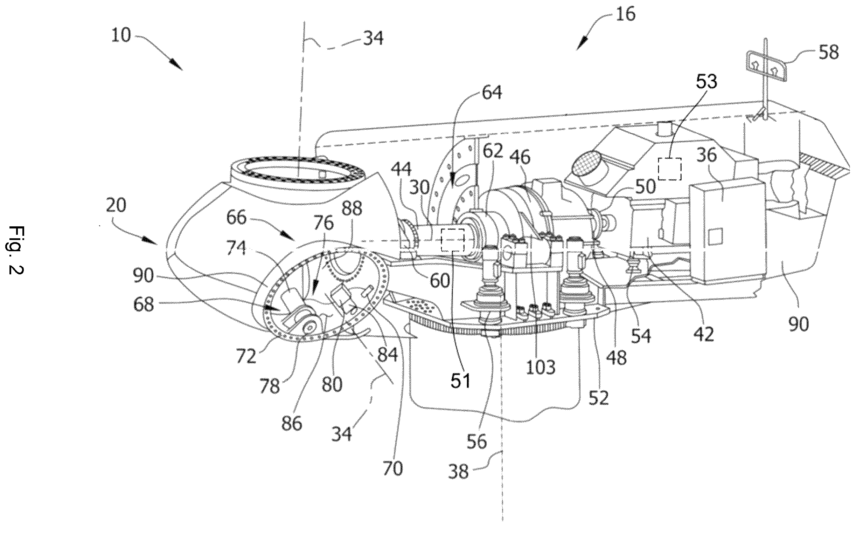

Figure 2 is an enlarged sectional view of a portion of the wind turbine 10. In the example, the wind turbine 10 includes the nacelle 16 and the rotor 18 that is rotatably coupled to the nacelle 16. More specifically, the hub 20 of the rotor 18 is rotatably coupled to an electric generator 42 positioned within the nacelle 16 by the main shaft 44, a gearbox 46, a high-speed shaft 48, and a coupling 50. In the example, the main shaft 44 is disposed at least partially coaxial to a longitudinal axis (not shown) of the nacelle 16. A rotation of the main shaft 44 drives the gearbox 46 that subsequently drives the high-speed shaft 48 by translating the relatively slow rotational movement of the rotor 18 and of the main shaft 44 into a relatively fast rotational movement of the high-speed shaft 48. The latter is connected to the generator 42 for generating electrical energy with the help of a coupling 50. Furthermore, a transformer 90 and/or suitable electronics, switches, and/or inverters may be arranged in the nacelle 16 in order to transform electrical energy generated by the generator 42 having a voltage between e.g. 400V to 1000 V into electrical energy having medium voltage (e.g. 10 - 35 kV). Offshore wind turbines may have for example generator voltages between 650 V and 3500 V, and transformer voltages may for instance be between 30 kV and 70 kV. Said electrical energy is conducted via power cables from the nacelle 16 into the tower 15.

In some examples, the wind turbine 10 may include one or more shaft sensors 51. The shaft sensors may be configured to monitor at least one of torque loads acting on the main shaft 44 and/or the high-speed shaft 48, and a rotational speed of the shaft 44, 48. In some examples, the wind turbine 10 may include one or more generator sensors 53. The generator sensors may be configured to monitor at least one of a rotational speed of the generator 42 and a generator torque. Shaft sensors 51 and/or generator sensors 53 may include, for instance, one or more torque sensors (e.g., strain gauges or pressure sensors), optical sensors, accelerometers, magnetic sensors, speed sensors and Micro-Inertial Measurement Units (MIMUs).

The gearbox 46, generator 42 and transformer 90 may be supported by a main support structure frame of the nacelle 16, optionally embodied as a main frame 52. The gearbox 46 may include a gearbox housing that is connected to the main frame 52 by one or more torque arms 103. In the example, the nacelle 16 also includes a main forward support bearing 60 and a main aft support bearing 62. Furthermore, the generator 42 can be mounted to the main frame 52 by decoupling support means 54, in particular in order to prevent vibrations of the generator 42 to be introduced into the main frame 52 and thereby causing a noise emission source.

Optionally, the main frame 52 is configured to carry the entire load caused by the weight of the rotor 18 and components of the nacelle 16 and by the wind and rotational loads, and furthermore, to introduce these loads into the tower 15 of the wind turbine 10. The rotor shaft 44, generator 42, gearbox 46, high speed shaft 48, coupling 50, and any associated fastening, support, and/or securing device including, but not limited to, support 52, and forward support bearing 60 and aft support bearing 62, are sometimes referred to as a drive train 64.

In some examples, the wind turbine may be a direct drive wind turbine without gearbox 46. Generator 42 operates at the same rotational speed as the rotor 18 in direct drive wind turbines. They therefore generally have a much larger diameter than generators used in wind turbines having a gearbox 46 for providing a similar amount of power than a wind turbine with a gearbox.

The nacelle 16 may also include a yaw drive mechanism 56 that may be used to rotate the nacelle 16 and thereby also the rotor 18 about the yaw axis 38 to control the perspective of the rotor blades 22 with respect to the wind direction 28.

For positioning the nacelle 16 appropriately with respect to the wind direction 28, the nacelle 16 may also include at least one meteorological measurement system which may include a wind vane and an anemometer. The meteorological measurement system 58 can provide information to the wind turbine controller 36 that may include wind direction 28 and/or wind speed.

In the example, the pitch system 32 is at least partially arranged as a pitch assembly 66 in the hub 20. The pitch assembly 66 includes one or more pitch drive systems 68 and at least one sensor 70. Each pitch drive system 68 is coupled to a respective rotor blade 22 (shown in figure 1) for modulating the pitch angle of a rotor blade 22 along the pitch axis 34. Only one of three pitch drive systems 68 is shown in figure 2.

In the example, the pitch assembly 66 includes at least one pitch bearing 72 coupled to hub 20 and to a respective rotor blade 22 (shown in figure 1) for rotating the respective rotor blade 22 about the pitch axis 34. The pitch drive system 68 includes a pitch drive motor 74, a pitch drive gearbox 76, and a pitch drive pinion 78. The pitch drive motor 74 is coupled to the pitch drive gearbox 76 such that the pitch drive motor 74 imparts mechanical force to the pitch drive gearbox 76. The pitch drive gearbox 76 is coupled to the pitch drive pinion 78 such that the pitch drive pinion 78 is rotated by the pitch drive gearbox 76. The pitch bearing 72 is coupled to pitch drive pinion 78 such that the rotation of the pitch drive pinion 78 causes a rotation of the pitch bearing 72.

Pitch drive system 68 is coupled to the wind turbine controller 36 for adjusting the pitch angle of a rotor blade 22 upon receipt of one or more signals from the wind turbine controller 36. In the example, the pitch drive motor 74 is any suitable motor driven by electric power and/or a hydraulic system that enables pitch assembly 66 to function as described herein. Alternatively, the pitch assembly 66 may include any suitable structure, configuration, arrangement, and/or components such as, but not limited to, hydraulic cylinders, springs, and/or servomechanisms. In certain embodiments, the pitch drive motor 74 is driven by energy extracted from a rotational inertia of hub 20 and/or a stored energy source (not shown) that supplies energy to components of the wind turbine 10.

The pitch assembly 66 may also include one or more pitch control systems 80 for controlling the pitch drive system 68 according to control signals from the wind turbine controller 36, in case of specific prioritized situations and/or during rotor 18 overspeed. In the example, the pitch assembly 66 includes at least one pitch control system 80 communicatively coupled to a respective pitch drive system 68 for controlling pitch drive system 68 independently from the wind turbine controller 36. In the example, the pitch control system 80 is coupled to the pitch drive system 68 and to a sensor 70. During normal operation of the wind turbine 10, the wind turbine controller 36 may control the pitch drive system 68 to adjust a pitch angle of rotor blades 22.

According to an embodiment, a power generator 84, for example comprising a battery and electric capacitors, is arranged at or within the hub 20 and is coupled to the sensor 70, the pitch control system 80, and to the pitch drive system 68 to provide a source of power to these components. In the example, the power generator 84 provides a continuing source of power to the pitch assembly 66 during operation of the wind turbine 10. In an alternative embodiment, power source 84 provides power to the pitch assembly 66 only during an electric power loss event of the wind turbine 10. The electric power loss event may include power grid loss or dip, malfunctioning of an electrical system of the wind turbine 10, and/or failure of the wind turbine controller 36. During the electric power loss event, the power generator 84 operates to provide electric power to the pitch assembly 66 such that pitch assembly 66 can operate during the electric power loss event.

In the example, the pitch drive system 68, the sensor 70, the pitch control system 80, cables, and the power source 84 are each positioned in a cavity 86 defined by an inner surface 88 of hub 20. In an alternative embodiment, said components are positioned with respect to an outer surface of hub 20 and may be coupled, directly or indirectly, to the outer surface.

As used herein, the term "processor" is not limited to integrated circuits referred to in the art as a computer, but broadly refers to a controller, a microcontroller, a microcomputer, a programmable logic controller (PLC), an application specific integrated circuit, and other programmable circuits, and these terms are used interchangeably herein.

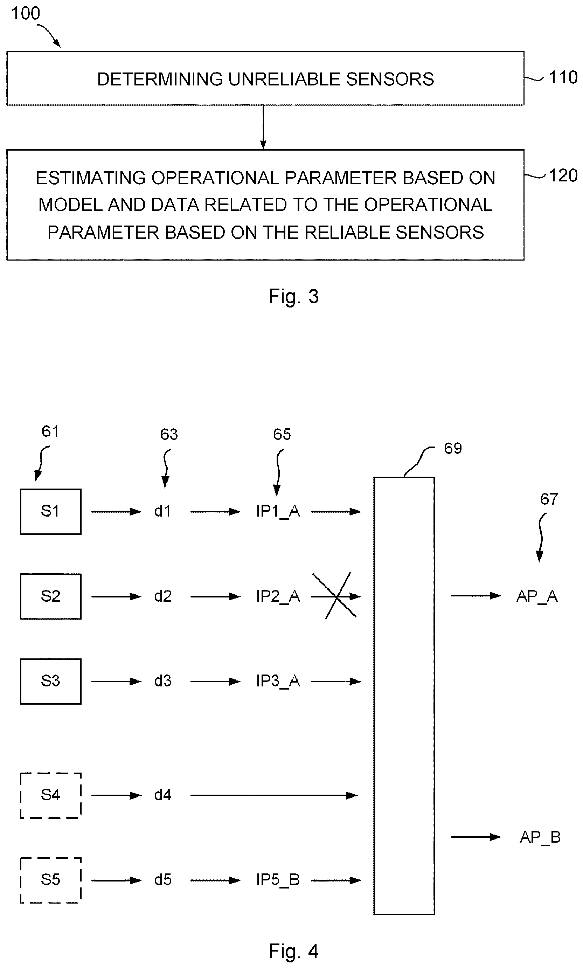

In an aspect of the present disclosure, a method 100 for estimating an actual value of an operational parameter of a wind turbine 10 is provided. Method 100 is schematically shown in the flow chart of figure 3. The method comprises, at block 110, receiving data related to the operational parameter from a plurality of sensors of the wind turbine 10. The method further comprises, at block 120, determining which sensors of the plurality of sensors are reliable and which sensors of the plurality of sensors are unreliable. The method further comprises, at block 130, estimating the actual value of the operational parameter based on a mathematical model and on the data related to the operational parameter received from the reliable sensors.

In this manner, the outputs of the wind turbine sensors which are not deemed reliable are not considered when estimating the actual value of the operational parameter. The accuracy of the actual value of the operational parameter may therefore be improved. The above reception, determination and estimation of blocks 110, 120 and 130 may for example be performed by a wind turbine controller 36, e.g. the main wind turbine controller. The mathematical model may comprise a plurality of equations which relate different operational parameters, for example rotor speed and pitch.

Figure 4 schematically illustrates an example of how an actual value of an operational parameter 67 can be determined from measurements 63 from a plurality of wind turbine sensors 61. In figure 4, five wind turbine sensors S1 - S5 can be seen. These sensors may be arranged in suitable locations on or with a wind turbine 10. For example, a sensor may be arranged in the power converter, another one in the generator 42, yet another one in the slip ring between a fixed portion and a rotating portion of the wind turbine rotor 18, etc. In examples, at least one of the sensors may comprise or may be an encoder. The encoder may be an absolute encoder or an incremental encoder. It should be clear that in other examples, different sensors in different locations and/or sensors measuring different variables and/or a different number of sensors may be used.

The method may further comprise using data related to the operational parameter 63 from two or more sensors of the plurality of sensors 61 to determine which sensors are reliable and which sensors are unreliable. In the simplified example of figure 4, sensors S1 - S3 are configured to measure data d1 - d3 related to a first operational parameter A, and sensors S4 - S5 are configured to measure data d4 - d5 related to a second operational parameter B different from the first parameter. In other examples, a sensor may measure data which is related to more than one operational parameter. For example, the measurements of one sensor may be used to determine two or more operational parameters.

The measured data 63 may be directly or indirectly indicative of the operational parameter. For example, the operational parameter may be rotational speed and a sensor may measure rotational speed. The measurements of the sensor are therefore directly indicative of the operational parameter. Or the operational parameter may be rotational speed, but the sensor may e.g. measure currents in the power converter from which rotor speed can be determined. The measurements of the sensors are therefore indirectly indicative of the operational parameter.

In this regard, the method may further comprise determining at least one intermediate value 65 of the operational parameter based on the measured data related to the operational parameter 63 measured by at least one sensor, wherein estimating the actual value of the operational parameter 67 comprises estimating the actual value 67 based on the at least one intermediate value 63. The intermediate value 65 may be directly indicative of the operational parameter.

In the example of figure 4, data relative to the operational parameter 63 is measured, and intermediate values 65 are determined. If parameter A is for example rotational speed, measured data d1 - d3 may be used to determine intermediate operational parameters IP1_A - IP3_A. Suitable mathematical equations may be used depending on the measurements made. Intermediate operational parameters IP1_A - IP3_A may be different values of the parameter A (rotational speed in this example).

In a non-limiting example, d1 could be a sensor for measuring an azimuth position of the generator rotor, d2 might be a sensor for measuring an azimuth position of the wind turbine rotor and d3 might be a sensor for measuring currents in the converter. From these measurements, individual intermediate values for the rotor speed may be calculated. These intermediate values may be used for determining which of the sensors are reliable and for estimating the actual value of the rotor speed.

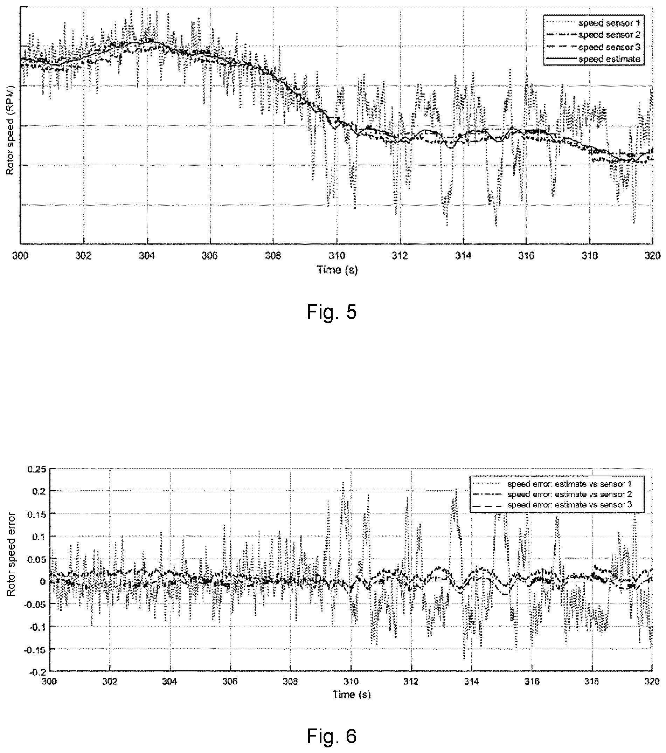

Figure 5 shows an example of three rotor speeds obtained from measurements by three sensors. As a sensor measures a plurality of data during a certain period of time, figure 5 shows rotor speed curves, and rotor speed herein refers to rotor speed curves derived from each of the individual sensors. These rotor speeds may be intermediate operational parameters 65. If a sensor directly measures an operational parameter, calculating or otherwise deriving corresponding intermediate values would not be necessary, as the value of the measured data would correspond to the value of the intermediate operational parameter.

As can be seen in figure 5, one of the rotational speeds obtained based on measurements from the wind turbine sensors is more variable, e.g. more noisy, than the other two. The noise in the signal renders the sensor less reliable. If the noisiest rotational speed is considered when estimating the actual value of rotational speed, then the actual value of rotational speed could be further from its true value. If it is known that this noisiest rotational speed is excessively noisy, then not including it in the estimation of the actual value of rotational speed may help to provide a value of the rotational speed closer to its true value, i.e. an actual value which is more accurate and more precise. The wind turbine 10 may therefore operate better, e.g. aggressively pitching or having a high pitch activity may be avoided or at least reduced in some cases. Oscillations and vibrations in the wind turbine may also be reduced in further examples.

Within the scope of the present disclosure, determining that a sensor is unreliable may be performed in several ways. For example, determining which sensors are unreliable may comprise comparing two values directly indicative of the operational parameter based on measurements from different sensors, e.g. comparing two intermediate values of the operational parameter 65 determined based on different sensors or comparing two values of data related to the operational parameter 63 measured by different sensors. As measurements may fluctuate and sensors may not measure exactly the same value each time, a range or a group of values (either measured 63 or determined 65) may be compared with a range or group of values which, in theory, should be equal.

For example, if it is known that a certain sensor is more reliable than others, the data provided by other sensors may be compared to the data provided by the more reliable sensor. If the difference between both data, e.g. an average difference, is above a difference threshold, then the corresponding sensor may be deemed unreliable. Other ways of comparing data measured by two or more sensors, or data obtained based on two or more sensors (i.e. values of intermediate operational parameters) may be performed. It may also be possible to compare data measured by one sensor with corresponding values of an intermediate operational parameter obtained based on measurements from another sensor.

Determining which sensors are unreliable may comprise, additionally or alternatively to the above, analyzing a noise in, e.g. how noisy a range of measurements of a sensor 63 is, or analyzing a noise in, e.g. how noisy a range of intermediate values 65 is. Analyzing a noise may for example comprise calculating a standard deviation of a range of values or calculating a root-mean-square deviation (RMSD) of a range of values.

A noise threshold may be defined, and if the noise threshold is reached or overcome, the corresponding sensor may be deemed unreliable. Depending for example on the available sensors or on the operational parameter which is to be determined, a noise threshold may be set at a certain level. In some examples, a noise threshold may be predefined for each sensor. For example, values of noise thresholds may be stored in a memory of the wind turbine controller 36. Once the wind turbine has been started, the wind turbine may access and read these values. The noise threshold for each sensor may be different.

Peak-to-peak differences in a range of values may also be determined. For example, if peak-to-peak values determined in a range of values are less than a threshold, it may be determined that a sensor is providing a frozen signal, and therefore the sensor is unreliable.

Still another way to determine which sensors are unreliable may comprise comparing two or more values directly indicative of the operational parameter based on measurements from different sensors with an actual value of the operational parameter estimated in one or more previous steps, optionally the previous step.

As a non-limiting example, it is known that due to the inertia of a wind turbine rotor, the rotational speed of the wind turbine rotor cannot change very quickly. As a further example, if an azimuth angle and a rotor speed have been determined in a previous step, then based on these, a subsequent azimuth angle that can be expected may be determined as well. A large deviation from the expected azimuth angle received from a specific sensor can indicate reduced reliability.

As an example in relation with rotor speed, a first intermediate parameter 65 obtained from measurements of a first sensor in the current step may have a value of 6.2. The first intermediate parameter 65 obtained from measurements of a second sensor in the current step may have a value of 6.5. And the first intermediate parameter 65 obtained from measurements of a third sensor in the current step may have a value of 5.7. In the previous step, the actual value of the operational parameter 67 was estimated to be 6.4. Therefore, by comparing the values 6.2, 6.5 and 5.7 to 6.4, it may be concluded that 5.7 is not a reliable value and that the third sensor is therefore unreliable. A threshold over which a corresponding sensor would be deemed unreliable may be defined.

Also, if measured or calculated data indicative of an operational parameter is abovea threshold, e.g. a predefined threshold, the corresponding sensor may be deemed invalid. For example, if it is known that rotational speed of the rotor cannot be above a certain rotational speed, and measured/calculated data is indicating that the rotational speed is above such threshold, then the corresponding sensor may be deemed invalid.

In the example of figure 4, the value of the intermediate operational parameter IP2_A has been discarded, and sensor S2 has been deemed unreliable. Regarding parameter B, both sensors S4 and S4 have been deemed reliable. Data d4 is directly indicative of parameter B, data d5 is indirectly indicative of parameter B and intermediate operational parameter IP5_B is directly indicative of parameter B.

Once there are values of an operational parameter which are deemed reliable, these may be used for determining an actual value of the operational parameter. In particular, the actual value of the operational parameter 67 may be estimated by combining data directly indicative of the operational parameter based on data received from the reliable sensors. For example, if three values of rotation speed have been determined (measured and/or calculated from data from different sensors), the three values may be combined to obtain a value of rotational speed more accurate than a value of rotational speed obtained from a single sensor.

According to the invention, the actual value of the operational parameter 67 is estimated by performing an initial estimation of the actual value of the operational parameter with the mathematical model and by correcting the initial estimation with the data directly indicative of the operational parameter based on data received from the reliable sensors. For example, an initial estimation for a time (or step) t2 may be performed at a time t1 (before time t2), and at time t2, measurements may be taken and used to correct the initial estimation.

The data indicative of the operational parameter based on data received from the reliable sensors may be assigned different weights for the correction of the initial estimation. The weight assigned may depend at least on the sensor noise measured or expected for each sensor. For example, if a first sensor is noisier than a second sensor, data obtained from the first sensor may be assigned a smaller weight than data obtained from the second sensor. This may be used in addition to the definition of individual noise thresholds for each sensor.

A weight may also be assigned to the initial estimation of the actual value. In some examples, a weight may be assigned to the initial estimation of the actual value of the operational parameter based on one or more previous steps. If the mathematical model is deemed to provide a rather good or very good initial estimation, the weight assigned to the initial estimation of the actual value may be high.

For example, if estimating the actual value of the operational parameter comprises combining an initial estimation of the actual value, a first intermediate value and a second intermediate value, a weight of 0.7 may be assigned to the initial estimation, a weight of 0.20 may be assigned to the first intermediate value and a weight of 0.10 may be assigned to the second intermediate value. The estimation may then be the sum of each of these values multiplied by the corresponding weights.

If not all sensors are deemed reliable, the corresponding measurements and weights, if already assigned, are ignored. The actual value of the operational parameter may then be determined as the sum of each of the intermediate values multiplied by the corresponding weights, and divided by the sum of the weights.

As explained before, if a sensor is deemed to be unreliable, the data obtained from that sensor is not considered, and only data obtained from reliable sensors is used to correct the initial estimation. According to the invention, a Kalman filter is used. Reference number 69 in figure 4 represents a Kalman filter.

In some examples, the mathematical model may comprise three states, in particular position, speed and acceleration. That is to say, the mathematical model may predict at a certain time or step (t1) a value of position, e.g. azimuth angle, a value of speed, e.g. rotor speed, and a value of acceleration, e.g. rotor acceleration, for the next time or step (t2). Then, at the next time or step (t2), values of the three states may be obtained based on measurements of a plurality of sensors. For example, the values of position and speed may be measured or derived from measurements, and acceleration may be calculated. These values may be combined with the values of position, speed and acceleration predicted in the previous step (t1) to obtain actual values for the position, speed and acceleration for the current step (t2).

As speed data may be obtained from data related to position, but position data may not be obtained from data related to speed alone, at least one sensor configured to measure data indicative of position and at least one sensor configured to measure data indicative of speed may be provided. In particular, at least two sensors configured to measure data indicative of position and at least two sensors configured to measure data indicative of speed may be provided. Therefore, if for example one of the sensors configured to measure data indicative of speed is deemed unreliable, data from the other sensor configured to measure data indicative of speed and/or data from at least one of the sensors configured to measure data indicative of position may still be used.

In general, the actions at blocks 110 and 120 of method 100 may be repetitively performed. For example, once the initial estimation has been corrected, a new initial estimation for a later time may be performed, and additional measurements may be performed to correct the new initial estimation, etc. According to the invention, a Kalman filter is used, and a covariance matrix may be monitored to determine how good the estimations of the actual values are.

A curve of actual values of rotor speed can be seen in figure 5. In this example, measurements from three wind turbine sensors were used to correct an initial estimation of rotor speed. But as can be seen from figure 5, and also from figure 6, the data obtained by the noisiest sensor may have been discarded for obtaining a more accurate actual value of rotor speed. Figure 6 schematically illustrates a difference between the curve of actual values of rotor speed of figure 5 and the curves of values of rotor speed determined from three different wind turbine sensors of figure 5. One of the curves of figure 6 is noisier than the other two curves.

If one or more sensors are deemed unreliable, the method may further comprise stopping measuring data with one or more of the unreliable sensors. If one or more sensors are caused to stop measuring data, the method may further comprise start measuring data with one or more of the stopped unreliable sensors. After a certain period of time, it may be checked whether the sensor operates better than before. If this is the case, its output may be considered when determining the actual value of the operational parameter. If the sensor is still deemed to be unreliable, it may not be used in the estimation of the actual value.

As shown in the example of figure 4, there may be more than one wind turbine sensor for measuring data related to the operational parameter. As method 100 excludes data obtained from sensors deemed unreliable, in some examples this method may be applied if there is more than one sensor configured to provide data related to the corresponding operational parameter whose actual value is to be estimated.

The operational parameter may be a setpoint for controlling the wind turbine in some examples. For instance, one or more certain setpoint values may be determined with method 100. In other examples, the actual value of the operational parameter may be used later on to calculate a setpoint. For example, it may be particularly complicated to obtain a reliable value of the speed of the rotor 18. If the actual value of the operational parameter is a rotor speed value, this value may be used as a setpoint and/or may be used in the determination of other setpoints, e.g. pitch angle or torque.

The operational parameter may be an azimuth angle in some examples. Having an accurate value of azimuth angle may for example help to perform a suitable and effective control of pitch angle of individual wind turbine blades 22. The operational parameter may of course be different in other examples.

And as schematically shown in figure 4, method 100 may be used to calculate the actual value of more than one operational parameter. For example, method 100 may be used to estimate the actual value of rotor speed and azimuth angle.

According to a further aspect of the disclosure, a wind turbine controller 36 is provided. The wind turbine controller comprises a processor and a memory. The memory comprises instructions that, when executed by the processor cause the processor to receive data related to an operational parameter from a plurality of sensors of the wind turbine; determine which sensors of the plurality of sensors 61 are reliable and which sensors of the plurality of sensors 61 are unreliable; and estimate an actual value of an operational parameter 67 based on a mathematical model and on the data related to the operational parameter received from the reliable sensors.

The memory may generally be configured to store suitable computer-readable instructions that, when implemented by the processor, configure the wind turbine controller 36 to perform, or trigger the performance of, various steps disclosed herein, e.g. with respect to method 100, as appropriate. The memory may also be configured to store data, e.g. predefined data or data from measurements and/or calculations.

The wind turbine controller 36 may further comprise a communications module. The communications module may facilitate communications between the controller 36 and the various components of the wind turbine 10. For instance, the communications module may serve as an interface to enable the turbine controller 36 to transmit control signals to a pitch drive system 66 for controlling the pitch angle of the rotor blades 22. The communications module may be configured to communicatively connect the controller 36 with other elements of the wind turbine 10. Connecting may be carried out via a wired connection and/or via a wireless connection, e.g. by using any suitable wireless communications protocol known in the art. Moreover, the communications module may include a sensor interface, e.g. one or more analog-to-digital converters, to enable signals transmitted from one or more sensors (e.g. a wind speed sensor) to be converted into signals that can be understood and processed by the processor.

According to a further aspect of the disclosure, a wind turbine 10 is provided. The wind turbine comprises a tower 15, a nacelle 16 on top of the tower 12, a rotor 18 connected to the nacelle 16, the rotor comprising a hub 20 and a plurality of blades 22 connected to the hub, the wind turbine further comprising the wind turbine controller 36 of the previous aspect.

In some examples, the wind turbine may be an offshore wind turbine. As offshore wind turbines do not include a gearbox between the rotor 18 and the generator 42, it may be particularly difficult to determine some operational parameters, e.g. rotational speed of the wind turbine rotor 18. Therefore the above method may be particularly beneficial for an offshore wind turbine. Although the above method may of course be performed by an onshore wind turbine.

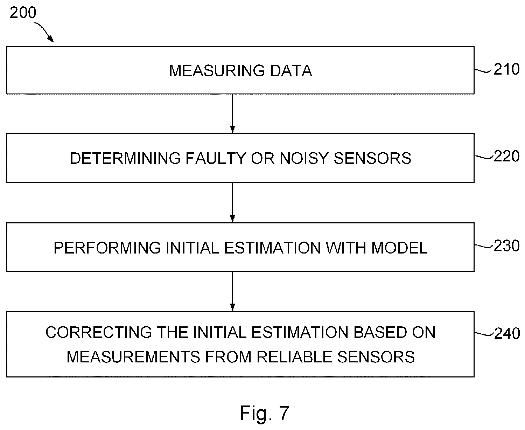

According to a further aspect of the disclosure, a method 200 for estimating a value of an operational parameter of a wind turbine is provided. Method 200 is shown in the flow chart of figure 7. Details and explanations of the previous aspects may be combined and applied to this aspect, and *vice versa.*

Method 200 comprises, at block 210, measuring data related to the operational parameter 63 with a plurality of wind turbine sensors 61; at block 220, determining which sensors are faulty or excessively noisy; at block 230, performing an initial estimation of the actual value of the operational parameter with a mathematical model; and at block 240, correcting the initial estimation with data directly indicative of the operational parameter based on measurements 63 by the reliable sensors.

At least two or more sensors may allow to determine data directly indicative of the operational parameter. I.e., there may be at least one redundant sensor.

Determining which sensors are faulty or excessively noisy may comprise reaching or exceeding a noise threshold. The noise threshold may be predefined and stored in a memory of a wind turbine controller 36 in some examples.

The operational parameter may be rotational speed. In other examples, the operational parameter may be azimuth angle. Values of other operational parameters may also be determined with method 200.

A Kalman filter is used to perform the steps of performing the initial estimation and correcting the initial estimation. Other suitable algorithms may alternatively be used.

This written description uses examples to disclose a teaching, including the preferred embodiments, and also to enable any person skilled in the art to put the teaching into practice, including making and using any devices or systems and performing any incorporated methods. The patentable scope is defined by the claims, and may include other examples that occur to those skilled in the art. Such other examples are intended to be within the scope of the claims if they fall within the scope of the appended claims. Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claim, and shall not be construed as limiting the scope of the claim.

## Claims

1. A method (100) for estimating an actual value of an operational parameter (67) of a wind turbine (10) wherein the operational parameter is rotor speed and/or azimuth angle, the method (100) comprising:
receiving (110) data related to the operational parameter (63) from a plurality of sensors (61) of the wind turbine (10);
determining (120) which sensors of the plurality of sensors (61) are reliable and which sensors of the plurality of sensors (61) are unreliable;
estimating (130) the actual value of the operational parameter (67) based on a mathematical model and on the data related to the operational parameter (63) received from the reliable sensors,
wherein estimating (130) the actual value of the operational parameter (67) comprises combining data directly indicative of the operational parameter based on data received from the reliable sensors and further comprises performing an initial estimation of the actual value of the operational parameter with the mathematical model and correcting the initial estimation with the data directly indicative of the operational parameter based on data received from the reliable sensors; and
using a Kalman filter for performing the initial estimation and for correcting the initial estimation.

2. The method of claim 1, wherein determining (110) which sensors are unreliable comprises analyzing a noise in a range of measurements of a sensor (61), or analyzing a noise in a range of intermediate values (65).

3. The method of claim 1 or 2, wherein determining (110) which sensors are unreliable comprises comparing two or more values directly indicative of the operational parameter based on measurements from different sensors (61) with an actual value of the operational parameter (67) estimated in one or more previous steps.

4. The method of any of claims 1 - 3, further comprising using data related to the operational parameter (63) from two or more sensors of the plurality of sensors (61) to determine (120) which sensors are reliable and which sensors are unreliable.

5. The method of any of claims 1 - 4, further comprising determining at least one intermediate value of the operational parameter (65) based on the measured data related to the operational parameter (63) measured by at least one sensor, and wherein
estimating (120) the actual value of the operational parameter (67) comprises estimating the actual value (67) based on the at least one intermediate value (65).

6. The method of any of claims 1 - 5, further comprising stopping measuring data with one or more of the unreliable sensors.

7. The method of any of claims 1 - 6, wherein the operational parameter is a setpoint for controlling the wind turbine.

8. The method of any of claims 1 - 7, wherein the plurality of sensors (61) comprises an encoder.

9. A wind turbine controller (36) comprising a processor and a memory, wherein the memory comprises instructions that, when executed by the processor, cause the processor to:
receive data related to an operational parameter (63) from a plurality of sensors (61) of the wind turbine (10), wherein the operational parameter is rotor speed and/or azimuth angle;
determine which sensors of the plurality of sensors (61) are reliable and which sensors of the plurality of sensors (61) are unreliable;
estimate an actual value of an operational parameter (67) based on a mathematical model and on the data related to the operational parameter (63) received from the reliable sensors,
wherein estimating (130) the actual value of the operational parameter (67) comprises combining data directly indicative of the operational parameter based on data received from the reliable sensors and further comprises performing an initial estimation of the actual value of the operational parameter with the mathematical model and correcting the initial estimation with the data directly indicative of the operational parameter based on data received from the reliable sensors; and
using a Kalman filter for performing the initial estimation and for correcting the initial estimation.

10. A wind turbine (10) comprising a tower (15), a nacelle (16) on top of the tower (15), a rotor (18) connected to the nacelle (16), the rotor (18) comprising a hub (20) and a plurality of blades (22) connected to the hub (20), the wind turbine (10) further comprising the wind turbine controller (36) of claim 9.

11. The wind turbine of claim 10, wherein the wind turbine (10) is an offshore wind turbine.

## Patentansprüche

1. Verfahren (100) zum Schätzen eines Istwerts eines Betriebsparameters (67) einer Windkraftanlage (10), wobei der Betriebsparameter die Rotordrehzahl und/oder der Azimutwinkel ist, wobei das Verfahren (100) umfasst:
Empfangen (110) von Daten, die sich auf den Betriebsparameter (63) beziehen, von einer Vielzahl von Sensoren (61) der Windkraftanlage (10) ;
Bestimmen (120) welche der mehreren Sensoren (61) zuverlässig und welche der mehreren Sensoren (61) unzuverlässig sind;
Schätzen (130) des tatsächlichen Werts des Betriebsparameters (67) auf der Grundlage eines mathematischen Modells und der von den zuverlässigen Sensoren empfangenen Daten, die sich auf den Betriebsparameter (63) beziehen,
wobei das Schätzen (130) des Istwerts des Betriebsparameters (67) das Kombinieren von Daten, die den Betriebsparameter direkt angeben, auf der Grundlage von Daten, die von den zuverlässigen Sensoren empfangen wurden, umfasst und ferner das Durchführen einer anfänglichen Schätzung des Istwerts des Betriebsparameters mit dem mathematischen Modell und das Korrigieren der anfänglichen Schätzung mit den Daten, die den Betriebsparameter direkt angeben, auf der Grundlage von Daten, die von den zuverlässigen Sensoren empfangen wurden, umfasst; und
Verwenden eines Kalman-Filters zur Durchführung der ersten Schätzung und zur Korrektur der ersten Schätzung.

2. Verfahren nach Anspruch 1, wobei das Bestimmen (110), welche Sensoren unzuverlässig sind, das Analysieren eines Rauschens in einem Messbereich eines Sensors (61) oder das Analysieren eines Rauschens in einem Bereich von Zwischenwerten (65) umfasst.

3. Verfahren nach Anspruch 1 oder 2, wobei das Bestimmen (110), welche Sensoren unzuverlässig sind, das Vergleichen von zwei oder mehr Werten, die den Betriebsparameter direkt angeben und auf Messungen von verschiedenen Sensoren (61) basieren, mit einem tatsächlichen Wert des Betriebsparameters (67), der in einem oder mehreren vorhergehenden Schritten geschätzt wurde, umfasst.

4. Verfahren nach einem der Ansprüche 1 bis 3, das ferner das Verwenden von Daten in Bezug auf den Betriebsparameter (63) von zwei oder mehr Sensoren der Vielzahl von Sensoren (61), um zu bestimmen (120), welche Sensoren zuverlässig und welche Sensoren unzuverlässig sind, umfasst.

5. Verfahren nach einem der Ansprüche 1 bis 4, das ferner das Bestimmen mindestens eines Zwischenwerts des Betriebsparameters (65) auf der Grundlage der von mindestens einem Sensor gemessenen Daten, die sich auf den Betriebsparameter (63) beziehen, umfasst, und wobei
das Schätzen (120) des Istwerts des Betriebsparameters (67) das Schätzen des Istwerts (67) auf der Grundlage des mindestens einen Zwischenwerts (65) umfasst.

6. Verfahren nach einem der Ansprüche 1 bis 5, das ferner das Beenden der Datenerfassung mittels eines oder mehreren der unzuverlässigen Sensoren umfasst.

7. Verfahren nach einem der Ansprüche 1 bis 6, wobei der Betriebsparameter ein Sollwert zur Steuerung der Windkraftanlage ist.

8. Verfahren nach einem der Ansprüche 1 bis 7, wobei die Vielzahl von Sensoren (61) einen Encoder umfasst.

9. Eine Windkraftanlagen-Steuerung (36), die einen Prozessor und einen Speicher umfasst, wobei der Speicher Befehle enthält, die, wenn sie vom Prozessor ausgeführt werden, den Prozessor veranlassen:
zum Empfangen von Daten, die sich auf einen Betriebsparameter (63) beziehen, von einer Vielzahl von Sensoren (61) der Windkraftanlage (10), wobei der Betriebsparameter die Rotordrehzahl und/oder der Azimutwinkel ist;
zum Bestimmen, welche der mehreren Sensoren (61) zuverlässig und welche der mehreren Sensoren (61) unzuverlässig sind;
zum Schätzen eines Istwerte eines Betriebsparameters (67) auf der Grundlage eines mathematischen Modells und der von den zuverlässigen Sensoren empfangenen Daten bezüglich des Betriebsparameters (63),
wobei das Schätzen (130) des Istwerts des Betriebsparameters (67) das Kombinieren von Daten, die direkt auf den Betriebsparameter hinweisen, auf der Grundlage von Daten, die von den zuverlässigen Sensoren empfangen wurden, umfasst und ferner das Durchführen einer anfänglichen Schätzung des Istwerts des Betriebsparameters mit dem mathematischen Modell und das Korrigieren der anfänglichen Schätzung mit den Daten, die direkt auf den Betriebsparameter hinweisen, auf der Grundlage von Daten, die von den zuverlässigen Sensoren empfangen wurden, umfasst; und
Verwendung eines Kalman-Filters zur Durchführung der ersten Schätzung und zur Korrektur der ersten Schätzung.

10. Eine Windkraftanlage (10), umfassend einen Turm (15), eine Gondel (16) auf dem Turm (15), einen mit der Gondel (16) verbundenen Rotor (18), wobei der Rotor (18) eine Nabe (20) und eine Vielzahl von mit der Nabe (20) verbundenen Rotorblättern (22) umfasst, wobei die Windkraftanlage (10) ferner die Windkraftanlagen-Steuerung (36) nach Anspruch 9 umfasst.

11. Die Windkraftanlage nach Anspruch 10, wobei die Windkraftanlage (10) eine Offshore-Windkraftanlage ist.

## Revendications

1. Procédé (100) pour estimer une valeur réelle d'un paramètre opérationnel (67) d'une éolienne (10), dans lequel le paramètre opérationnel est la vitesse du rotor et/ou l'angle d'azimut, le procédé (100) comprenant :
la réception (110) de données relatives au paramètre opérationnel (63) provenant d'une pluralité de capteurs (61) de l'éolienne (10) ;
déterminer (120) quels capteurs parmi la pluralité de capteurs (61) sont fiables et quels capteurs parmi la pluralité de capteurs (61) ne sont pas fiables ;
estimer (130) la valeur réelle du paramètre opérationnel (67) sur la base d'un modèle mathématique et des données relatives au paramètre opérationnel (63) reçues des capteurs fiables,
dans lequel l'estimation (130) de la valeur réelle du paramètre opérationnel (67) comprend la combinaison de données indiquant directement le paramètre opérationnel sur la base des données reçues des capteurs fiables et comprend en outre la réalisation d'une estimation initiale de la valeur réelle du paramètre opérationnel à l'aide du modèle mathématique et la correction de l'estimation initiale à l'aide des données indiquant directement le paramètre opérationnel sur la base des données reçues des capteurs fiables ; et
l'utilisation d'un filtre de Kalman pour effectuer l'estimation initiale et pour corriger l'estimation initiale.

2. Procédé selon la revendication 1, dans lequel la détermination (110) des capteurs non fiables comprend l'analyse d'un bruit dans une plage de mesures d'un capteur (61), ou l'analyse d'un bruit dans une plage de valeurs intermédiaires (65).

3. Procédé selon la revendication 1 ou 2, dans lequel la détermination (110) des capteurs non fiables comprend la comparaison de deux ou plusieurs valeurs indiquant directement le paramètre opérationnel, sur la base de mesures provenant de différents capteurs (61), avec une valeur réelle du paramètre opérationnel (67) estimée lors d'une ou plusieurs étapes précédentes.

4. Procédé selon l'une quelconque des revendications 1 à 3, comprenant en outre l'utilisation de données relatives au paramètre opérationnel (63) provenant de deux capteurs ou plus parmi la pluralité de capteurs (61) pour déterminer (120) quels capteurs sont fiables et quels capteurs ne sont pas fiables.

5. Procédé selon l'une quelconque des revendications 1 à 4, comprenant en outre la détermination d'au moins une valeur intermédiaire du paramètre opérationnel (65) sur la base des données mesurées relatives au paramètre opérationnel (63) mesurées par au moins un capteur, et dans lequel
l'estimation (120) de la valeur réelle du paramètre opérationnel (67) comprend l'estimation de la valeur réelle (67) sur la base de la au moins une valeur intermédiaire (65).

6. Procédé selon l'une quelconque des revendications 1 à 5, comprenant en outre l'arrêt de la collecte des données de mesure provenant d'un ou de plusieurs des capteurs non fiables.

7. Procédé selon l'une quelconque des revendications 1 à 6, dans lequel le paramètre opérationnel est une consigne pour la commande de l'éolienne.

8. Procédé selon l'une quelconque des revendications 1 à 7, dans lequel la pluralité de capteurs (61) comprend un codeur.

9. Système de commande d'éolienne (36) comprenant un processeur et une mémoire, dans lequel la mémoire comprend des instructions qui, lorsqu'elles sont exécutées par le processeur, amènent le processeur à :
recevoir des données relatives à un paramètre opérationnel (63) provenant d'une pluralité de capteurs (61) de l'éolienne (10), dans lequel le paramètre opérationnel est la vitesse du rotor et/ou l'angle d'azimut ;
déterminer quels capteurs parmi la pluralité de capteurs (61) sont fiables et quels capteurs parmi la pluralité de capteurs (61) ne sont pas fiables ;
estimer une valeur réelle d'un paramètre opérationnel (67) sur la base d'un modèle mathématique et des données relatives au paramètre opérationnel (63) reçues des capteurs fiables,
dans lequel l'estimation (130) de la valeur réelle du paramètre opérationnel (67) comprend la combinaison de données indiquant directement le paramètre opérationnel sur la base des données reçues des capteurs fiables et comprend en outre la réalisation d'une estimation initiale de la valeur réelle du paramètre opérationnel à l'aide du modèle mathématique et la correction de l'estimation initiale à l'aide des données indiquant directement le paramètre opérationnel sur la base des données reçues des capteurs fiables ; et
l'utilisation d'un filtre de Kalman pour effectuer l'estimation initiale et pour corriger l'estimation initiale.

10. Une éolienne (10) comprenant une tour (15), une nacelle (16) au sommet de la tour (15), un rotor (18) relié à la nacelle (16), le rotor (18) comprenant un moyeu (20) et une pluralité de pales (22) reliées au moyeu (20), l'éolienne (10) comprenant en outre le système de commande d'éolienne (36) selon la revendication 9.

11. L'éolienne selon la revendication 10, dans laquelle l'éolienne (10) est une éolienne offshore.
